# EUROPÄISCHE PATENTSCHRIFT

(11) **EP 0 437 175 B1**
(45) Veröffentlichungstag und Bekanntmachung des Hinweises auf die Patenterteilung: **20.10.1993**
(21) Anmeldenummer: 90810912.7
(22) Anmeldetag: 23.11.1990
(51) Int. Cl.: H01M 8/24, H01M 8/02

(54) **Brennstoffzellenbatterie**
Fuel cell battery
Batterie de piles à combustible

(30) Priorität: 09.01.1990 CH 66/90
(43) Veröffentlichungstag der Anmeldung: 17.07.1991
(73) Patentinhaber: SULZER INNOTEC AG, CH-8401 Winterthur (CH)
(72) Erfinder: Barp, Bruno, CH-8964 Rudolfstetten (CH)
(74) Vertreter: Hammer, Bruno, Dr.

(56) Entgegenhaltungen:
- WO-A-86/06762
- CH-A- 490 742
- FR-A- 2 182 650
- US-A- 3 394 032
- US-A- 4 169 917
- US-A- 4 476 198
- US-A- 4 490 445
- PATENT ABSTRACTS OF JAPAN, Band 10, Nr. 39 (E-381)[2096], 15. Februar 1986; & JP-A-60 195 880 (HITACHI SEISAKUSHO K.K.) 04-10-1985
- PATENT ABSTRACTS OF JAPAN, Band 14, Nr. 117 (E-898)[4060], 5. März 1990; & JP-A-1 313 855 (NKK CORP.) 19-12-1989
- PATENT ABSTRACTS OF JAPAN, Band 11, Nr. 306 (E-546)[2753], 6. Oktober 1987; & JP-A-62 98 567 (HITACHI LTD) 08-05-1987

## Beschreibung

Die Erfindung betrifft ein Gas- und Luft-Einspeiseelement zu einer Brennstoffzellenbatterie gemäss dem Oberbegriff des Anspruchs 1 und eine Brennstoffzellenbatterie mit derartigen Einspeiseelementen.

Das elektrochemisch aktive Element einer Brennstoffzelle mit Feststoffelektrolyten besteht aus einer Kathode, an der Sauerstoffmoleküle unter Aufnahme von Elektronen ionisiert werden, einer Anode, an der Sauerstoffionen mit Wasserstoff und/oder Kohlenmonoxid zu Wasser beziehungsweise Kohlendioxid unter Elektronenabgabe umgesetzt werden, und dem die beiden Elektroden verbindenden keramischer Feststoffelektrolyten, der aus Metalloxiden besteht und oxidionenleitend ist. Der Transport der Sauerstoffionen durch den Feststoffelektrolyten erfolgt durch Diffusion und ist erst bei höhern Temperaturen - rund tausend Grad Celsius - und nur für dünne Schichten - rund hundert Mikrometer - ausreichend wirkungsvoll; je tiefer die Temperatur ist oder je dicker die Elektrolytschicht ist, desto geringer fällt der Wirkungsgrad der Brennstoffzelle aus. Solche keramische Elektrolyte sind im Handel erhältlich. Es ist zu erwarten, dass in Zukunft Feststoffelektrolyte entwickelt werden, die bei tiefern Temperaturen und grössern Schichtdicken gute Wirkungsgrade aufweisen.

Aus der EP-PS 0.055.011 ist eine Vorrichtung mit einer Vielzahl von rohrförmigen Brennstoffzellen bekannt, mit der aus Luft und brennbaren Gasen, insbesondere Wasserstoff und Kohlenmonoxid, elektrische Energie und Wärme erzeugt wird. Eine derartige Brennstoffzelle besteht aus einem porösen, luftdurchlässigen Trägerrohr, auf dessen äussern Oberfläche Kathode, Feststoffelektrolyt und Anode als dünne, übereinanderliegende Schichten aufgebracht sind. Die Anode, die die äussere Schicht bildet, und die Elektrolytschicht sind an einer Stelle, die über die gesamte Länge des aktiven Teils des Rohrs verläuft, unterbrochen. Dieser Streifen ist als elektrische Kontaktstelle für die Kathode ausgebildet. Die Brennstoffzelle ist an einem Ende geschlossen. Zu diesem Ende führt innerhalb des Trägerrohres ein Einspeiserohr für die Luft. Dieses Einspeiserohr dient auch als Wärmetauscher: Die schon vorerhitzte Luft nimmt beim Transport durch das Einspeiserohr Wärme auf, die bei den elektrochemischen Reaktionen freigesetzt wird. Diese zusätzliche Erhitzung ist für die Prozessführung vorteilhaft. Eine Vorrichtung mit derartigen Brennstoffzellen hat den Vorteil, dass keine Dichtungen zwischen den Lufträumen und den Gasräumen nötig sind. Hingegen besteht der Nachteil, dass die Herstellung derartiger Brennstoffzellen aufwendig und daher teuer ist.

Bei einem andern Typ von Brennstoffzelle mit Feststoffelektrolyten ist das elektrochemisch aktive Element eben. Es bildet eine dünnschichtige Platte, auf deren beiden Seiten die Elektroden aufgebracht sind und bei der die Luft nicht durch eine poröse Tragstruktur diffundieren muss. Solche Brennstoffzellen lassen sich weit kostengünstiger als die rohrförmigen herstellen. Jedoch treten hier gravierende Probleme mit der Abdichtung zwischen den Gas- und den Lufträumen auf. Überdies werden bei diesen Anordnungen Gas und Luft im Quer- oder Gegenstrom geführt, was bezüglich Wirkungsgrad und Wärmespannungen ungünstig ist.

Es ist Aufgabe der Erfindung, eine Brennstoffzellenbatterie mit ebenen Zellen zu schaffen, bei der mit einfachen Mitteln die Luft- von den Gasräumen abgedichtet werden können, bei der Parallelführung von Gas und Luft möglich ist und bei der Zwangskräfte infolge unterschiedlicher Wärmeausdehnungen klein sind.

Die Lösung der Aufgabe wird durch ein Gas- und Luft-Einspeiseelement herbeigeführt, wie es durch die Merkmale des Anspruchs 1 gekennzeichnet ist, und durch eine Vorrichtung mit derartigen Einspeiseelmenten, gemäss dem Kennzeichen des unabhängigen Anspruchs 9.

Die erfindungsgemässen Einspeiseelemente für Gas und Luft bilden zusammen mit den elektrochemisch aktiven Platten wechselweise angeordnet einen Stapel, bei dem Kathode und Anode benachbarter Platten elektrisch leitend verbunden sind. Da die Elektroden sehr dünne, nur wenige Mikrometer dicke Filme sind, ist die Elektronenleitung entlang der Oberflächen mit grossen elektrischen Widerständen verbunden. Um die Ohmschen Verluste gering halten zu können, müssen über die gesamten Elektrodenoberflächen verteilt Kontaktstellen angebracht sein, über die die Elektronen zu- beziehungsweise abgeleitet werden können. Der optimale Abstand zwischen den Kontaktstellen hängt unter anderm von der Leitfähigkeit der Elektroden und deren Dicke ab. Elektronenleitende Strukturen mit solchen Kontaktstellen sind in den abhängigen Ansprüchen 2 bis 5 näher gekennzeichnet. Die Ansprüche 6 bis 8 beziehen sich auf geometrische Formen der Einspeiseelemente und damit auch auf die Form des gesamten Stapels.

Die abhängigen Ansprüche 10 bis 16 betreffen verschiedene vorteilhafte Ausführungsformen der erfindungsgemässen Brennstoffzellenbatterie.

Die Erfindung zeichnet sich durch folgende Vorteile auf: Pro Zelle oder Stufe ist wegen der Ringform nur eine Dichtung nötig. Das Gas- und Luft-Einspeiseelement und die elektrochemisch aktive Platte werden als separate Teile hergestellt; dies ist einfacher, als wenn die Zellen als Einheiten, die die Funktionen der beiden Teile vereinigen, hergestellt würden. Durch die zweiteilige und rotationssymmetrische Konstruktion ist eine Wärmedehnung möglich, die nicht behindert ist und daher nur geringe Eigenspannungen erzeugt.

Im folgenden wird die Erfindung anhand der Zeichnungen näher beschrieben. Es zeigen:
- Fig.1: einen Längsschnitt durch die Brennstoffzellenbatterie,
- Fig.2a: eine elektronenleitende Struktur, die in Kontakt mit einer elektrochemisch aktiven Platte steht,
- Fig.2b: eine variante Form der elektronenleitenden Struktur
- Fig.3: einen Ausschnitt aus einer elektronenleitenden Struktur, die zusätzlich eine strömungslenkende Funktion hat,
- Fig.4: einen Ausschnitt eines Einspeiseelementes mit weitern Teilen der Brennstoffzellenbatterie,
- Fig.5: den Querschnitt durch eine Zelle mit Sammelkanal für das verbrauchte Gas,
- Fig.6a: eine konische Platte,

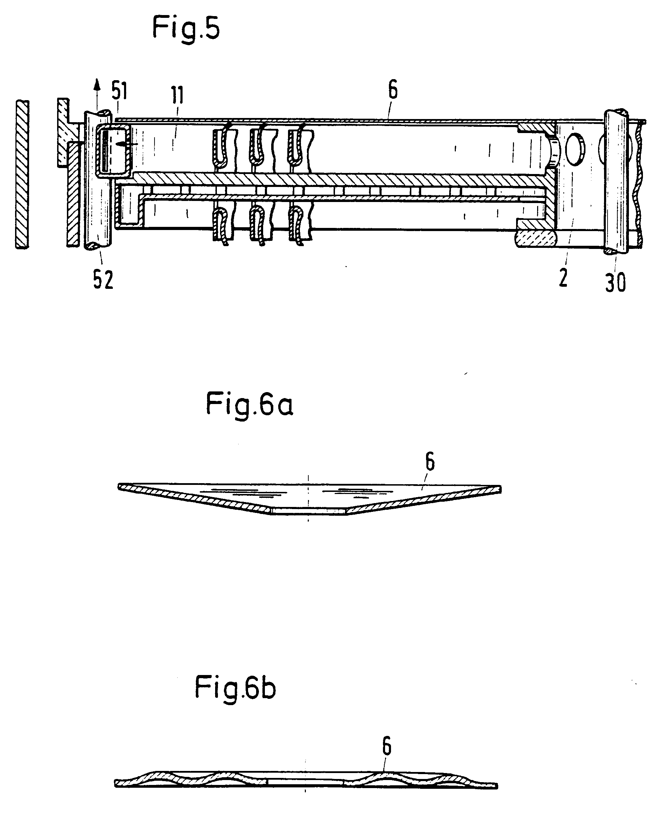

- Fig.6: b eine gewellte Platte und

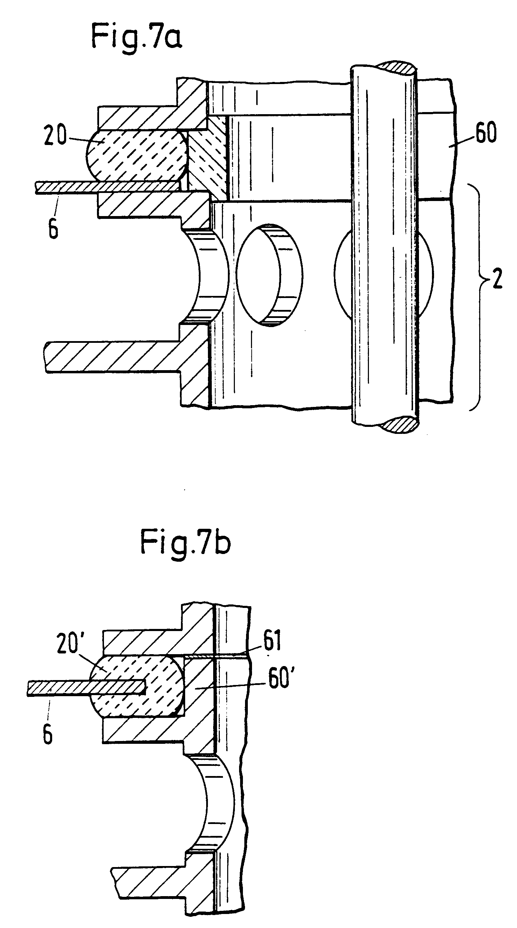

- Fig.7a, Fig.7b: zentraler Bereich der erfindungsgemässen Brennstoffzellenbatterie mit abstandhaltenden Mitteln zwischen den Einspeiseelementen.

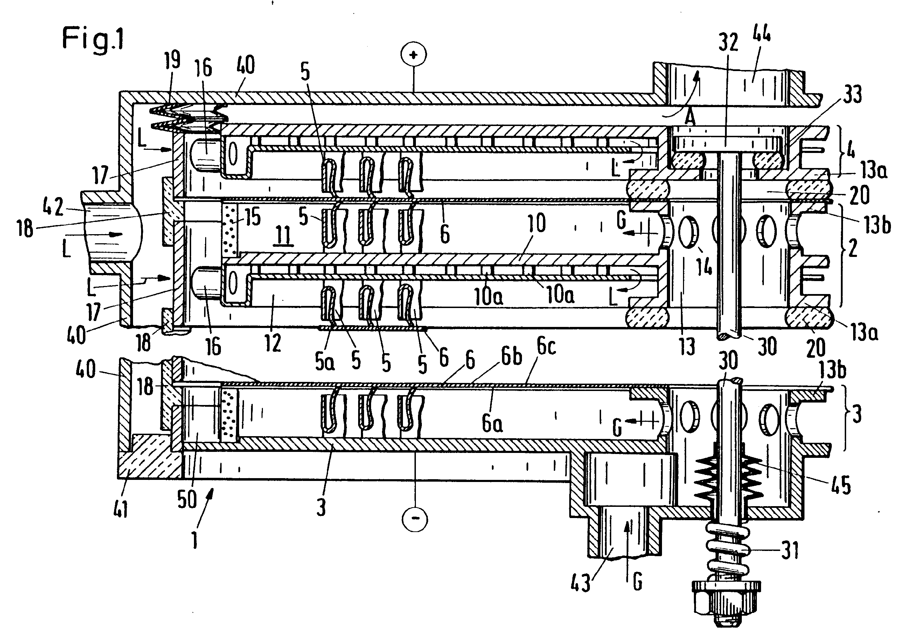

Die Brennstoffzellenbatterie 1 besteht aus einer grössern Anzahl von gleichartigen Zellen, die stapelartig in Serie geschalten sind. In Fig.1 ist nur eine solche Zelle dargestellt. Der Stapel wird an seinen beiden Enden durch spezielle Endelemente 3, 4 abgeschlossen. Die Zelle umfasst ein Gas- und Luft-Einspeiseelement 2 mit elektronenleitenden Strukturen 5 und zwei elektrochemisch aktive Platten 6, wobei diese Platten mit den benachbarten Zellen geteilt werden. Die Zelle könnte auch anders definiert werden, nämlich mit der elektrochemisch aktiven Platte 6 als zentraler Komponente und mit Einspeiseelementen 2, die nur teilweise zur Zelle gehören.

Die Zelle ist zentralsymmetrisch, beispielsweise kreisförmig oder auch polygonal. Das Einspeiseelement 2 weist einen plattenförmigen Hohlkörper auf, der für die eingespiesene Luft als Wärmetauscher 10 dient. Die bei den Elektrodenreaktionen freiwerdende Wärme wird dabei teilweise von der Luft aufgenommen. Der Rest der Reaktionswärme wird durch das Gas abgeführt. Der Wärmetauscher 10 bildet auch die Trennwand zwischen dem Gasraum 11 und dem Luftraum 12. Die Gaszufuhr erfolgt über das zentrale Rohrstück 13, dessen Achse mit der Symmetrieachse der Zelle zusammenfällt. Die Durchtrittsöffnungen 14 für das Gas können als Drosselelemente ausgebildet sein, mit dem Zweck, alle Zellen gleichmässig mit Gas zu versehen. Der Gasraum 11 ist an seiner Peripherie von einer perforierten oder porösen, gasdurchlässigen Wand 15 abgeschlossen. Die Luft wird über radiale Zuleitungsrohre 16 in den Wärmetauscher 10 zugeführt; sie tritt beim zentralen Rohrstück 13 in den Luftraum 12 ein. Wie ersichtlich ist, wird Gas und Luft solcherart zugeführt, dass eine Gleichstromführung beidseits der elektrochemisch aktiven Platten 6 möglich ist. Im Wärmetauscherinnern können Rippen 10a oder andere Elemente für eine verstärkte Wärmeübertragung sorgen. Mit den Zuleitungsrohren 16 ist ein zylindrisches Wandstück 17 verbunden, das die äussere Begrenzung des Einspeiseelements 2 bildet.

In den beiden Teilkammern 11 und 12 der Zelle befinden sich die elektronenleitenden Strukturen 5, die in Fig.1 nur teilweise dargestellt sind. Sie stehen mit Kontaktelementen 5a in Verbindungen mit der Anode 6a beziehungsweise der Kathode 6b. Diese Verbindungen können als Gefügeverbindungen durch Diffusionsschweissen oder Löten erzeugt sein. Die Kontaktelemente 5a sind federnd ausgebildet und können flexibel in axialer sowie radialer Richtung reagieren, wenn beispielsweise Verformungen durch Wärmedehnungen stattfinden. Die elektronenleitenden Strukturen 5 stehen auch mit dem Wärmetauscher 10, der ebenfalls elektrisch leitend ist, in elektrischem Kontakt. Dadurch ergibt sich die elektrische Verbindung zwischen der Anode 6a und der Kathode 6b benachbarter elektrochemisch aktiver Platten 6. Die Strukturen 5 fördern auch den Wärmeübergang zwischen den Elektroden 6a, 6b und dem Wärmetauscher 10.

Die Kontaktelemente 5a werden gegen die elektrochemisch aktiven Platten 6 gedrückt. Da diese Platten 6 sehr dünn sind - ungefähr 150 Mikrometer - ist es vorteilhaft, wenn die Kontaktstellen immer paarweise beidseitig angebracht sind, wie es in Fig.1 dargestellt ist.

Anders als in dem in Fig.1 dargestellten Ausführungsbeispiel brauchen in einer varianten Form die elektronenleitenden Strukturen 5 nicht über den ganzen Wärmetauscher - 10 verteilt den elektrischen Kontakt herstellen. Sind die Strukturen 5 elektrisch leitend zusammenhängende Gebilde, so genügt eine einzige Kontaktstelle für die elektrische Verbindnung. Der Wärmetauscher 10 kann auch durch einen zusätzlichen elektrischen Leiter überbrückt werden.

Die Zellen der Brennstoffzellenbatterie 1 werden durch ein Zugelement 30 zusammengespannt. Dabei kommen zwischen die Flansche 13a, 13b benachbarter zentraler Rohrstücke 13 ein Ringbereich einer elektrochemisch aktiven Platten 6, die mindestens eine öffnung innerhalb des Rohrstücks 13 aufweist, und ein Dichtungsring 20 zu liegen. Dieser Dichtungsring 20, der beispielsweise aus einem Keramikfilz besteht, hindert das Gas, in den Luftraum 12 einzudringen.

Die zylindrischen Wandstücke 17 der Einspeiseelemente 2 weisen zwischen benachbarten Zellen Zwischenräume auf, die durch Ringe 18 aus elektrisch isolierendem Material überdeckt werden. Diese Ringe 18 sind nur lose aufgesetzt und sollen den Wandstücken 17 genügend Spiel lassen, sodass eine axiale Bewegung der Zellen nicht behindert wird; das Spiel soll aber doch klein sein, sodass nur wenig Luft durch die Ritzen nach innen treten kann.

Im Ringraum 50 zwischen den Wandstücken 17 und der Peripherie der Wärmetauscher 10 kann das verbrauchte aber immer noch Brennstoff enthaltende Gas zusammen mit der aus den Lufträumen 12 austretenden Luft verbrannt werden.

Die Endelemente 3, 4 entsprechen im wesentlichen den einen Seiten der Einspeiseelemente 2. Das untere Endelement 3 bildet den Gehäuseboden der Brennstoffzellenbatterie 1. Das obere Endelement 4 ist im dargestellten Beispiel elektrisch leitendend über einen Federbalg 19 mit dem Gehäusewand-Oberteil 40 verbunden. Ein ringförmiger elektrischer Isolator 41 verbindet den Gehäusewand-Oberteil 40 mit dem untern Endelement 3. Der Oberteil 40 bildet den positiven Pol der Brennstoffzellenbatterie 1 und der Gehäuseboden 3 den negativen. Die Pole sind in Fig.1 symbolisch durch Plus- beziehungsweise Minuszeichen, umschlossen von Kreisen, dargestellt.

Die Luft wird der Brennstoffzellebatterie 1 über den Stutzen 42 zugeführt und das Gas über den Stutzen 43. Das Abgas verlässt die Vorrichtung über den Stutzen 44. Mit dem heissen Abgas wird in einem nicht gezeigten Rekuperator die frische Luft vorerhitzt. Das Gas wird mit Vorteil auch vorgeheizt, bevor es der Brennstoffzellenbatterie 1 zugeführt wird. Durch die Pfeile in Fig.1 sind die Strömungsrichtungen der Luft (L), des Gases (G) und des Abgases (A) angegeben.

Das Zugelement 30, mit dem der Zellenstapel zusammengespannt wird, kann beispielsweise mit einer Druckfeder 31, die ausserhalb des Gehäuses angebracht ist, nachgezogen werden. Die Konstruktion der gesamten Vorrichtung ist solcherart ausgeführt, dass bei Nachgeben der Dichtungsringe 20 der Stapel sich ungehindert etwas zusammenziehen kann und dass damit die Dichtheit erhalten bleibt. Das Zugelement 30 drückt mit einem Abdeckteller 32 über einen Dichtungsring 33 auf den Zellenstapel. Der Durchtritt des Zugelements 30 durch den Gehäuseboden ist mit einem Federbalg 44 versehen, der einen Austritt von Gas an die Umgebung verhindert.

Grundsätzlich liesse sich die Konstruktion der Brennstoffzellenbatterie solcherart abändern, dass die Luftzufuhr zentral von innen her und die Gaszufuhr von der Peripherie her erfolgen würden. Diese Lösung wäre aber weniger vorteilhaft, da die Dichtungsringe, die an die Peripherie des Zellenstapels zu liegen kämen, viel grösser als bei der erfindungsgemässen Vorrichtung sein müssten.

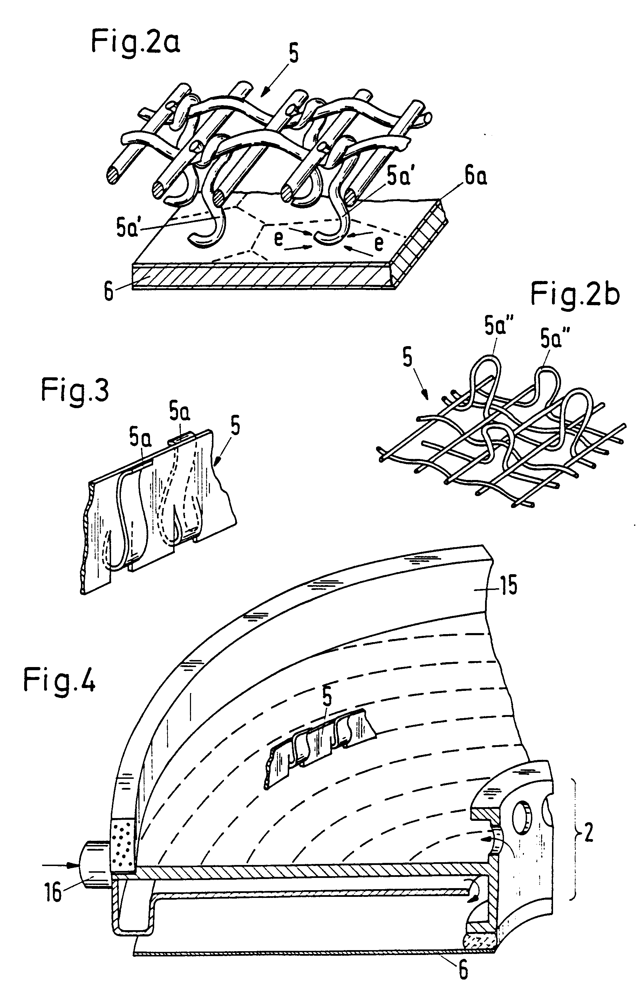

Die Fig.2a und Fig.2b zeigen anhand von zwei Beispielen, wie aus Draht die elektronenleitenden Strukturen 5 hergestellt werden können. Auf ein Drahtgewebe werden die Kontaktelemente 5a befestigt, entweder in Form gewellter Drahtstückchen 5a' in Fig.2a oder in Form von Drahtschlaufen 5a" in Fig.2, wobei mehrere Schlaufen an einem einzigen Draht angebracht sein können. In Fig.2a ist auch die elektrochemisch aktive Platte 6 ausschnittsweise dargestellt. Die Pfeile auf der Anode 6a bedeuten den Fluss der Elektronen e, die sich zum Kontaktelement 5a' bewegen.

Die Fig.3 zeigt einen Ausschnitt aus einer elektronenleitenden Struktur 5, die zusätzlich eine strömungslenkende Funktion hat. In Fig.4 ist mit den unterbrochen gezeichneten Kurven dargestellt, wie solche strömungslenkende Strukturen 5 im Gasraum 11 angeordnet sein können. Durch die spiralförmige Anordnung wird dafür gesorgt, dass das Gas optimal mit der Elektrode in Wechselwirkung treten kann. Die elektronenleitende Struktur 5 der Fig.4 ist eine variante Form der in Fig.3 gezeigten Ausführung; sie entspricht der in Fig.1 vorgesehenen Form. Diese elektronenleitenden Strukturen 5 bestehen aus dünnen Metallblechstreifen, bei denen aus zungenförmigen Teilstücken durch Biegen s-förmige Kontaktelemente 5a erzeugt worden sind.

Entsprechend können auch im Luftraum 12 elektronenleitende Strukturen 5 verwendet werden, die eine strömungslenkende Fungktion haben. Selbstverständlich können auch strömungslenkende Elemente vorgesehen werden, die keine elektronenleitende Funktion haben.

Fig.5 zeigt ausschnittsweise eine Zelle, bei der das verbrauchte Gas in einem torusförmigen Kanal 51 abgesaugt und über mindestens eine Sammelleitungen 52, die mit allen Zellen verbunden ist, separat aus der Brennstoffzellenbatterie 1 abgeführt wird. Dieses Gas lässt sich teilweise wieder dem Zuspeisegas zumischen und/oder es kann ausserhalb der Vorrichtung 1 verbrannt werden.

Beim Betrieb der Brennstoffzellenbatterie 1 bestehen in radialer Richtung Temperaturgradienten, die zu Wärmespannungen führen. Ist die elektrochemisch aktive Platte 6 leicht konisch oder gewellt, wie es in den Fig.6a, b dargestellt ist, so können diese Spannungen durch Deformationen der Platten 6 abgebaut werden.

Bei der in Fig.1 dargestellten Brennstoffzellenbatterie 1 besteht die Gefahr, dass bei zu starkem Zusammenspannen des Zellenstapels die elektrochemisch aktiven Platten 6 beschädigt werden. Dieser Mangel lässt sich beispielsweise durch Abstandshalterringe 60 beheben, wie es in Fig.7a gezeigt ist. Anstelle der Ringe 60 können selbstverständlich auch andere Mittel verwendet werden. Beispielsweise lassen sich die Ringe 18 (Fig.1) zu diesem Zweck verwenden; oder, wie in Fig.7b dargestellt, kann der Abstandhalter auch ein nicht loser Teil 60' des Einspeiseelements 2 sein. Die Abstandhalter 60 müssen aus einem elektrisch isolierenden Material bestehen oder es muss eine isolierende Trennschicht 61 zwischen benachbarten Einspeiseelementen 2 angeordnet sein.

Die Mittel zum Abstandhalten zwischen benachbarten Einspeiseelementen 2 sorgen dafür, dass die Dichtungsringe 20 nur beschränkt zusammenpressbar sind. Damit kann bei geeigneten Abmessungen der Abstandhaltemittel 60 und der Dichtungsringe 20 die Krafteinwirkung auf die elektrochemisch aktiven Platten 6 genügend gering gehalten werden, dass in den Platten 6 keine Risse oder Brüche entstehen.

In Fig.7b ist eine variante Ausführungsform des Dichtungsringes 20' gezeigt, bei der das abdichtende Einspannen der elektrochemisch aktiven Platten 6 noch schonender erfolgt. Dabei wird der innere Rand der zentralen öffnung der Platte 6 durch den mit einer Nut versehenen Dichtungsring 20' ummantelt. Bei dieser Ausführungsform ist überdies eine zuverlässigere Abdichtung zwischen Luft- und Gasraum zu erwarten.

## Patentansprüche

1. Gas- und Luft-Einspeiseelement (2) zu einer Brennstoffzellenbatterie (1) mit elektrochemisch aktiven Platten (6), wobei eine solche Platte aus einem schichtförmigen Feststoffelektrolyten besteht, der oxidionenleitend ist und der beidseitig mit für die Elektrodenreaktionen und für die elektrische Leitung geeigneten Materialien beschichtet ist,
dadurch gekennzeichnet, dass ein zumindest angenähert zentralsymmetrischer, plattenförmiger, als Wärmetauscher (10) für die Luft dienender Hohlkörper eine Begrenzung zwischen einem Gasraum (11) und einem Luftraum (12) bildet, dass im zentralen Bereich die Wärmetauscherplatte (10) von einem Rohrstück (13) in Richtung der Symmetrieachse durchstossen ist und dass dieses Rohrstück (13) flanschartige Enden (13a, 13b) aufweist, dass ferner der Luftstrom durch den Wärmetauscher (10) von der Peripherie zum Zentrum führend und der Gasstrom über das zentrale Rohrstück (13) in den Gasraum führend vorgesehen sind.

2. Einspeiseelement (2) nach Anspruch 1, dadurch gekennzeichnet, dass im angrenzenden Luftraum (12) sowie im Gasraum (11) elektronenleitende Strukturen (5) angeordnet sind, die mit Kontaktelementen (5a) versehen sind, welche die elektrische Verbindung mit den Oberflächen der elektrochemisch aktiven Platten (6) herstellen, und dass diese Strukturen (5) in den beiden angrenzenden Räumen (11, 12) elektrisch leitend miteinander verbunden sind.

3. Einspeiseelement (2) nach Anspruch 2, dadurch gekennzeichnet, dass der Wärmetauscher (10) elektrisch leitend ist und dass die luftseitige sowie die gasseitige Oberfläche mit den elektronenleitenden Strukturen (5) in elektrischem Kontakt stehen.

4. Einspeiseelement (2) nach einem der Ansprüche 2 oder 3, dadurch gekennzeichnet, dass die Kontaktelemente (5a) der elektronenleitenden Strukturen (5) federnd sind und in axialer sowie radialer Richtung flexibel sind.

5. Einspeiseelement (2) nach einem der Ansprüche 2 bis 4, dadurch gekennzeichnet, dass die elektronenleitenden Strukturen (5) eine die Gas- beziehungsweise Luftströmung lenkende Funktion aufweisen.

6. Einspeiseelement (2) nach einem der Ansprüche 1 bis 5, dadurch gekennzeichnet, dass die Wärmetauscherplatte (10) kreisförmig ist.

7. Einspeiseelement (2) nach einem der Ansprüche 1 bis 5, dadurch gekennzeichnet, dass die Wärmetauscherplatte (10) polygonal ist, insbesondere die Form eines regelmässigen Vieleckes aufweist.

8. Einspeiseelement (2) nach einem der Ansprüche 1 bis 7, dadurch gekennzeichnet, dass das zentrale Rohrstück (13) Flansche (13a, 13b) aufweist, die parallel zur Wärmetauscherplatte (10) sind.

9. Brennstoffzellenbatterie (1) mit Einspeiseelementen nach einem der Ansprüche 1 bis 8, dadurch gekennzeichnet, dass die elektrochemisch aktiven Platten (6) mit den Einspeiseelementen (2) wechselweise einen Stapel bilden und dass jeweils eine elektrochemisch aktive Platte (6) zusammen mit einem Dichtungsring (20) zwischen den flanschartigen Enden (13a, 13b) der zentralen Rohrstücke (13) benachbarter Einspeiseelemente eingespannt sind, wobei der Dichtungsring (20) luftraumseitig angeordnet ist.

10. Brennstoffzellenbatterie (1) nach Anspruch 9, dadurch gekennzeichnet, dass die elektrochemisch aktiven Platten (6), die Einspeiseelemente (2) und die Dichtungsringe (20) mit einem zentral angeordneten, in Achsrichtung verlaufenden Zugelement (30) zusammengespannt sind.

11. Brennstoffzellenbatterie (1) nach einem der Ansprüche 9 oder 10, dadurch gekennzeichnet, dass die Kontaktelemente (5a) der elektronenleitenden Strukturen (5) eine pressende Federkraft auf die elektrochemisch aktiven Platten (6) ausüben.

12. Brennstoffzellenbatterie (1) nach einem der Ansprüche 9 bis 11, dadurch gekennzeichnet, dass die elektronenleitenden Strukturen (5) mit den elektrochemisch aktiven Platten (6) durch elektrisch leitende Gefügebindungen verbunden sind.

13. Brennstoffzellenbatterie (1) nach einem der Ansprüche 9 bis 12, dadurch gekennzeichnet, dass die elektrochemisch aktive Platte (6) eine leicht konische Form aufweist.

14. Brennstoffzellenbatterie (1) nach einem der Ansprüche 9 bis 12, dadurch gekennzeichnet, dass die elektrochemisch aktive Platte (6) eine leicht gewellte Form aufweist.

15. Brennstoffzellenbatterie (1) nach einem der Ansprüche 9 bis 14, dadurch gekennzeichnet, dass an der Peripherie des Stapels ein Ringraum (50) angeordnet ist, der zur Verbrennung des verbrauchten aber immer noch Brennstoff enthaltenden Gases dient.

16. Brennstoffzellenbatterie (1) nach einem der Ansprüche 9 bis 14, dadurch gekennzeichnet, dass die Gasräume (11) an der Peripherie zum Abführen des verbrauchten Gases von Ringkammern (51) umschlossen sind.

17. Brennstoffzellenbatterie (1) nach einem der Ansprüche 9 bis 16 dadurch gekennzeichnet, dass konzentrisch zu den Dichtungsringen (20) Mittel (60, 18) zum Abstandhalten zwischen benachbarten Einspeiseelementen (2) angeordnet sind.

## Claims

1. A gas and air feed member (2) for a fuel cell battery (1) with electrochemically active plates (6), such a plate comprising a solid electrolyte in layer form which conducts oxide ions and is coated on both sides with materials suitable for the electrode reactions and for electrical conduction, characterised in that an at least approximately centrally symmetrical, plate-like hollow member serving as a heat exchanger (10) for the air forms a boundary between a gas space (11) and an air space (12), a tubular member (13) passes through the central region of the heat exchanger (10) along the axis of symmetry, and this tubular member (13) has flange-like ends (13a, 13b), and in addition the air flow is designed to run through the heat exchanger (10) from the periphery to the centre and the gas flow to run by way of the central tubular member (13) into the gas space.

2. A feed member (2) as claimed in claim 1, characterised in that in the adjoining air space (12) and in the gas space (11) electron-conducting structures (5) are disposed, which are provided with contact members (5a) and which make the electrical connection with the surfaces of the electrochemically active plates (6), and these structures (5) in the two adjoining spaces (11, 12) are electrically connected to one another.

3. A feed member (2) as claimed in claim 2, characterised in that the heat exchanger (10) is electrically conductive, and the surfaces on the air side and gas side are in electrical contact with the electron-conducting structures (5).

4. A feed member (2) as claimed in claim 2 or 3, characterised in that the contact members (5a) of the electron-conducting structures (5) are resilient and are flexible both in the axial and radial directions.

5. A feed member (2) as claimed in any of claims 2 to 4, characterised in that the electronic-conducting structures (5) serve to direct the flow of gas or air.

6. A feed member (2) as claimed in any of claims 1 to 5, characterised in that the heat exchanger plate (10) is circular.

7. A feed member (2) as claimed in any of claims 1 to 5, characterised in that the heat exchanger plate (10) is polygonal, and more particularly has the shape of a regular polygon.

8. A feed member as claimed in any of claims 1 to 7, characterised in that the central tubular member (13) has flanges (13a, 13b) which are parallel to the heat exchanger plate (10).

9. A fuel cell battery (1) with feed members (2) as claimed in any of claims 1 to 8, characterised in that the electrochemically active plates (6) alternate with the feed members (2) to form a stack, and an electrochemically active plate (6) with a respective sealing ring (20) is clamped between the flange-like ends (13a, 13b) of the central tubular members (13) of adjacent feed members, the sealing ring (20) being disposed on the air space side.

10. A fuel cell battery (1) as claimed in claim 9, characterised in that the electrochemically active plates (6), feed members (2) and sealing rings (20) are clamped together with a centrally mounted axially extending tension member (30).

11. A fuel cell battery (1) as claimed in claim 9 or 10, characterised in that the contact members (5a) of the electron-conducting structures (5) exert resilient pressure on the electrochemically active plates (6).

12. A fuel cell battery (1) as claimed in any of claims 9 to 11, characterised in that the electron-conducting structures (5) are connected to the electrochemically active plates (6) by electrically conductive structural connections.

13. A fuel cell battery (1) as claimed in any of claims 9 to 12, characterised in that the eectrochemically active plate (6) is slightly conical in form.

14. A fuel cell battery (1) as claimed in any of claims 9 to 12, characterised in that the electrochemically active plate (6) is slightly corrugated in form.

15. A fuel cell battery (1) as claimed in any of claims 9 to 14, characterised in that at the periphery of the stack there is an annular space (50) for combustion of the spent gas which still contains fuel.

16. A fuel cell battery (1) as claimed in any of claims 9 to 14, characterised in that the gas spaces (11) are enclosed at the periphery by annular chambers (51) for carrying away spent gas.

17. A fuel cell battery (1) according to any one of claims 9 to 16, characterised in that means (60, 18) are provided concentrically of the sealing rings (20) to provide spacing between adjacent feed members.

## Revendications

1. Elément d'alimentation en gaz et air (2) d'une batterie de piles à combustible (1) comportant des plaques (6) actives électrochimiquement, ces plaques étant constituées chacune d'un électrolyte solide en couche qui est conducteur d'ions oxyde et qui est recouvert, sur ses deux faces, de matériaux convenant aux réactions des électrodes et à la conduction électrique, caractérisé en ce qu'un corps creux, présentant une symétrie centrale au moins approximative, en forme de plaque, servant d'échangeur de chaleur (10) pour l'air, forme une séparation entre une chambre à gaz (11) et une chambre à air (12), en ce que dans la zone centrale la plaque d'échangeur de chaleur (10) est traversée par une pièce tubulaire (13) en direction de l'axe de symétrie et en ce que cette pièce tubulaire (13) comporte des extrémités (13a, 13b) à la manière de brides, en ce qu'en outre le courant d'air à travers l'échangeur de chaleur (10) est prévu pour passer de la périphérie vers le centre et le courant de gaz est prévu pour passer dans la chambre à gaz, par la pièce tubulaire (13) centrale.

2. Elément d'alimentation (2) selon la revendication 1, caractérisé en ce que dans la chambre à air (12) adjacente ainsi que dans la chambre à gaz (11) sont prévues des structures (5) conduisant les électrons, qui sont pourvues d'éléments de contact (5a), qui réalisent la liaison électrique avec la surface des plaques (6) actives électro-chimiquement et en ce que ces structures (5) sont reliées entre elles, de manière électriquement conductrice, dans les deux chambres (11, 12) adjacentes.

3. Elément d'alimentation (2) selon la revendication 1, caractérisé en ce que l'échangeur de chaleur (10) est électriquement conducteur et en ce que la surface côté air ainsi que la surface côté gaz sont en contact électrique avec les structures (5) conductrices d'électrons.

4. Elément d'alimentation (2) selon l'une des revendications 2 ou 3, caractérisé en ce que les éléments de contact (5a) des structures (5) conductrices d'électrons sont élastiques et sont flexibles aussi bien axialement que radialement.

5. Elément d'alimentation (2) selon l'une des revendications 2 à 4, caractérisé en ce que les structures (5) conductrices d'électrons ont pour fonction de guider le courant de gaz ou le courant d'air.

6. Elément d'alimentation (2) selon l'une des revendications 1 à 5, caractérisé en ce que la plaque (10) de l'échangeur de chaleur est circulaire.

7. Elément d'alimentation (2) selon l'une des revendications 1 à 5, caractérisé en ce que la plaque (10) de l'échangeur de chaleur présente une forme polygonale, en particulier la forme d'un polygone régulier.

8. Elément d'alimentation (2) selon l'une des revendications 1 à 7, caractérisé en ce que la pièce tubulaire (13) centrale comporte des brides (13a, 13b) qui sont parallèles à la plaque (10) de l'échangeur de chaleur.

9. Batterie de piles à combustible (1) comportant des élément d'alimentation (2) selon l'une des revendications 1 à 8, caractérisée en ce que les plaques (6) actives électrochimiquement forment, en alternance avec les éléments d'alimentation (2), une pile et en ce que chaque plaque (6) active électrochimiquement est serrée avec une bague d'étanchéité (20) entre les extrémités (13a, 13b) en brides des pièces tubulaires (13) centrales d'éléments d'alimentation voisins, la bague d'étanchéité (20) étant placée côté chambre à air.

10. Batterie de piles à combustible (1) selon la revendication 9, caractérisée en ce que les plaques (6) actives électrochimiquement, les éléments d'alimentation (2) et les bagues d'étanchéité (20) sont serrés ensemble avec un élément de traction (30) placé au centre, s'étendant axialement.

11. Batterie de piles à combustible (1) selon l'une des revendications 9 ou 10, caractérisée en ce que les éléments de contact (5a) des structures (5) conductrices d'électrons exercent une force de ressort de pression sur les plaques (6) actives électrochimiquement.

12. Batterie de piles à combustible (1) selon l'une des revendications 9 à 11, caractérisée en ce que les structures (5) conductrices d'électrons sont reliées aux plaques (6) actives électrochimiquement par des liaisons de texture.

13. Batterie de piles à combustible (1) selon l'une des revendications 9 à 12, caractérisée en ce que la plaque (6) active électrochimiquement présente une forme légèrement conique.

14. Batterie de piles à combustible (1) selon l'une des revendications 9 à 12, caractérisée en ce que la plaque (6) active électrochimiquement présente une forme légèrement ondulée.

15. Batterie de piles à combustible (1) selon l'une des revendications 9 à 14, caractérisée en ce qu'il est prévu, sur la périphérie de la pile, un espace annulaire (50) qui sert à la combustion du gaz usé mais contenant toujours du combustible.

16. Batterie de piles à combustible (1) selon l'une des revendications 9 à 14, caractérisée en ce que les chambres à gaz (11) sont entourées à la périphérie par des chambres annulaires (51), destinées à évacuer le gaz usé.

17. Batterie de piles à combustible (1) selon l'une des revendications 9 à 16, caractérisée en ce que concentriquement aux bagues d'étanchéité (20) il est prévu des moyens (60, 18) pour maintenir l'écartement entre des éléments d'alimentation (2) voisins.
